# EUROPEAN PATENT APPLICATION

(11) **EP 0 597 568 A1**
(43) Date of publication of application: **18.05.1994**
(21) Application number: 93305435.5
(22) Date of filing: 12.07.1993
(51) Int. Cl.: F15C 3/14, F15B 5/00

(54) **Pneumatic servos**

(30) Priority: 30.10.1992 US 969119
(71) Applicant: INTERNATIONAL CONTROL AUTOMATION FINANCE S.A., L-1724 Luxembourg (LU)
(72) Inventor: Hall, George R., II, Geneva, Ohio 44041 (US); Dippert, Raymond J., Cleveland, Ohio 44110 (US); Stevenson, Thomas E., Willoughby Hills, Ohio 44094 (US); Smith, James M., Eastlake, Ohio 44095 (US)
(74) Representative: Pilch, Adam John Michael

(57) **Abstract**

A pneumatic servo comprises a motor (10) having a shaft for rotation in response to an electrical signal. A cam (14) is connected to the shaft for rotation therewith. The cam (14) has an outer profiled periphery and opposite sides. A pneumatic nozzle (16) having an opening for directing a flow of gas towards one side of the cam (14) near the periphery, obscures the flow by different amounts as the cam (14) rotates to create a back pressure in the nozzle (16) thereby providing a pneumatic signal. A curved projection (30) engages an opposite side of the cam (14), the projection being aligned with the nozzle (16) opening and reducing oscillation excursions of the servo at gas pressures in the nozzle (16) above 12 psig (83 kPa-gage).

## Description

The present invention relates to pneumatic servos or controllers.

US Patent No. US-A-4 610 263 discloses a pneumatic servo assembly which utilizes a motor driven cam that moves in front of a pneumatic nozzle to cause a back pressure in the nozzle which is conveyed to a bellows as a pneumatic signal. The pneumatic signal is converted to an electrical signal and causes rotation of the cam to equalize the setting of the servo.

I/P positioners, such as the Type AP 7 positioner available from Bailey Controls Company, USA, are known which utilize similar servos. Servos, as described herein, are current-to-pneumatic converters that generally convert an electrical signal of 4 to 20 mA to a pressure signal of about 3 to 15 psig (about 21 to 103 kPa-gage).

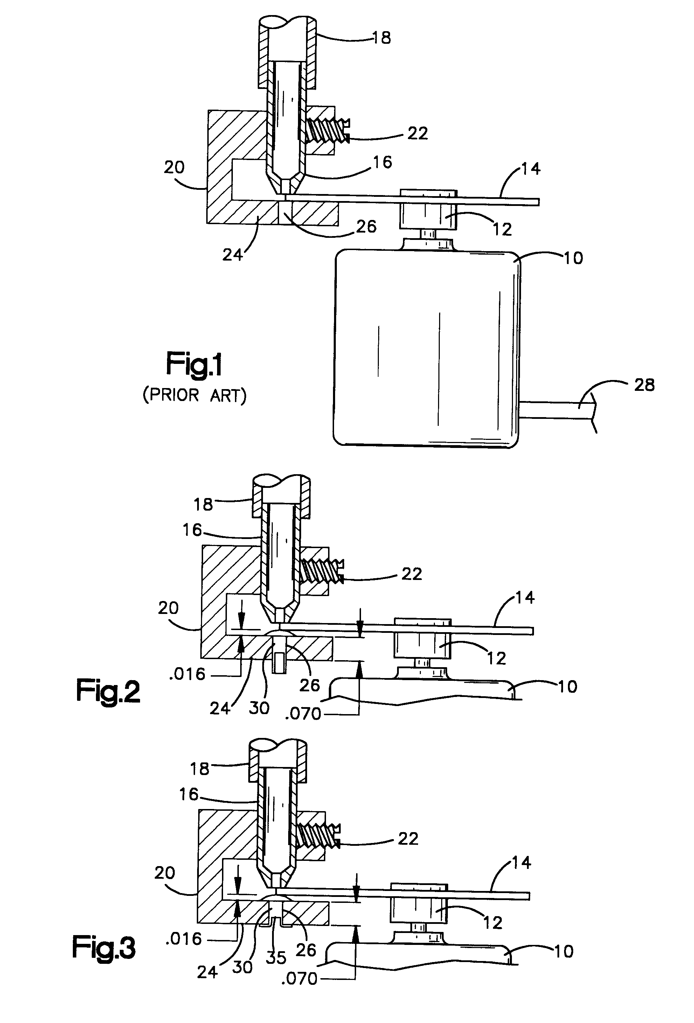

Figure 1 of the accompanying drawings illustrates a servo of the prior art which comprises a motor 10 having a shaft with a hub 12 which drives a cam 14. The outer periphery of the cam 14 is profiled so that as the hub 12 rotates, the outlet opening of a nozzle 16 is either fully covered, fully exposed or partially covered, to produce a back pressure in an air hose 18 connected to the nozzle. A nozzle support or bracket 20 having a bore therethrough for receiving the nozzle 16, holds the nozzle in a fixed position with a set or lock screw 22. The bracket 20 includes a flange 24 with an upper surface that backs up the cam 14. The flange 24 is positioned below the nozzle 16 with the cam 14 sliding between the nozzle and the flange. The flange 24 includes an air exhaust hole 26 which cooperates with air leaving the nozzle 16 and the cross- sectional area of the cam 14 covering the nozzle, to accurately produce a back pressure signal in the hose 18.

As shown in Figure 1, electrical signals can be provided over a pair of electrical lines 28 to the motor 10 to rotate the hub 12 and the cam 14. As a result of its rotation, the cam 14 in turn presents a different portion of its profiled outer periphery to the nozzle opening of the nozzle 16, to change the pneumatic signal in the form of back pressure in the hose 18.

It has been found that servos of the design shown in Figure 1 are not always stable above 12 psig (83 kPa-gage). It has been found that such servos oscillate with excursions of 0.7% to 0.8% at constant input to the servo.

According to the present invention there is provided a pneumatic servo comprising: a motor having a shaft for rotation in response to an electrical signal; a cam connected to the shaft for rotation therewith, the cam having an outer profiled periphery and opposite sides; a pneumatic nozzle having an opening for directing a flow of gas toward one side of the cam near the periphery, the flow through the opening being obscured by different amounts as the cam rotates to create a back pressure in the nozzle comprising a pneumatic signal; and a curved projection engaging an opposite side of the cam, the projection being aligned with the nozzle opening and reducing oscillation excursions of the servo.

A preferred embodiment of the present invention provides a servo which is capable of reducing oscillation excursions at nozzle pressures above 12 psig (83 kPa-gage) to no more than 0.25%.

A further feature of the preferred embodiment is the provision of a pneumatic servo which is resistant to oscillation excursions and which is simple in design, rugged in construction and economical to manufacture.

The invention will now be described by way of example with reference to the accompanying drawings, throughout which like parts are referred to by like references, and in which:
Figure 1 is a schematic partial and sectional view of a servo according to the prior art;
Figure 2 is a view similar to Figure 1 of a servo constructed according to an embodiment of the present invention;
Figure 3 is a view similar to Figure 2 showing how a rivet used in the servo is fixed;
Figure 4 is a side elevational view of a rivet used in the embodiment of Figures 2 and 3;
Figure 5 is a partial view similar to Figure 2 showing an alternative embodiment of the invention;
Figure 6 is a view similar to Figure 5 of a further embodiment of the invention; and
Figure 7 is a view similar to Figure 5 of a still further embodiment of the invention.

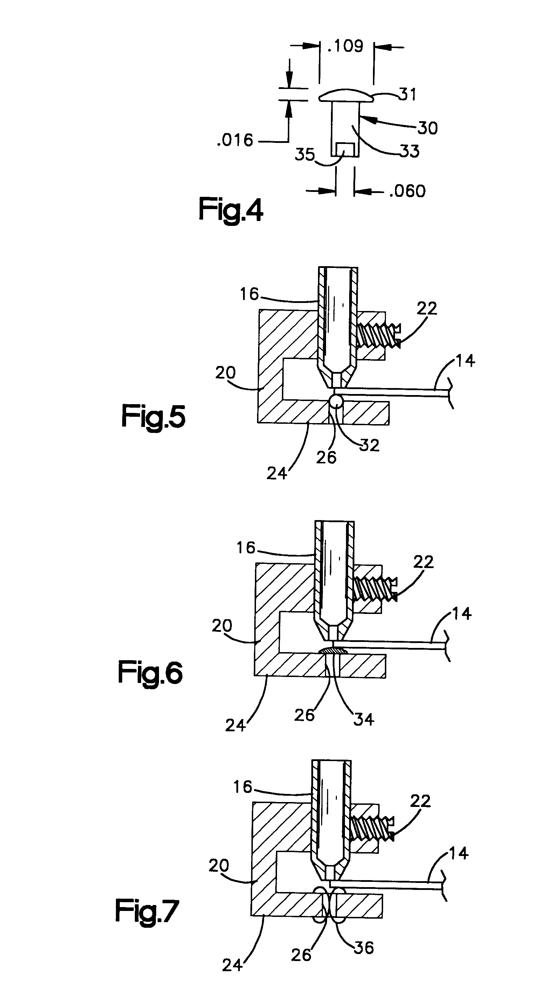

Referring now to Figures 2 and 3 where the same reference numerals as in Figure 1 are utilized to designate the same or functionally similar parts, the pneumatic servo includes a rivet 30 in the bore 26, which has a curved, for example spherical head 31 as shown in Figure 4, a shaft 33 extending through the bore 26 and a blind bore 35 which, as shown in Figure 3, can be flared to anchor the rivet 30 in the flange 24. An adhesive may be used to secure the rivet 30 in the bore 26.

The elevation of the curved surface of the rivet 30 above the upper surface of the flange 26 is advantageously 0.016 inches (0.41 mm). The flange 24 may have a thickness of 0.070 inches (1.78 mm).

As shown in Figure 4, the rivet head 31 may have an outer diameter of 0.109 inches (2.77 mm) and a diameter of the shaft 33 of 0.060 inches (1.52 mm).

Tests conducted with nine servos as shown in Figures 2 and 3 and two additional previously-proposed Type AP7 servos were conducted. Typical oscillation excursions and worst case excursions with the rivet in place for the nine servos and the two Type AP7 units are shown in the following table. The table also shows the worst case excursions for the two type AP7 servos without the rivet in place. Gas flow is within 1 % of 15 psig (103 kPa-gage) and all values are in percent.

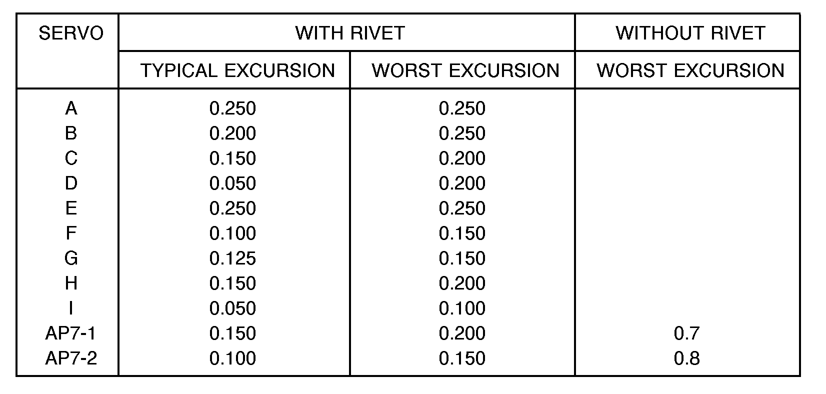

Instead of the rivet 30, alternative curved surfaces can be used for engagement against the opposite side of the cam 14 as shown in Figures 5 to 7.

In Figure 5, a ball-bearing 32 is fixed over the bore in the flange 24 to achieve the same effect.

In Figure 6, the material of the flange 24 may be profiled or a slippery material such as TEFLON (registered trademark) 34 can be used on the upper surface of the flange 24.

In Figure 7, an eyelet 36 has been fixed in the bore of the flange 34 to achieve the same purpose.

While generally a full closing of the bore 26 in the flange 24 is preferably desired, the example of Figure 7 shows an open eyelet which has a curved upper surface that can also achieve reductions in oscillation excursions.

Returning to Figure 2, the nozzle 16 may advantageously be made of number 303 stainless steel with the support or bracket 20 being aluminium chromate. The cam 14 may be made of a synthetic resin material, for example, polycarbonate having 0.010 inches (0.25 mm) thickness or polyester having a thickness of 0.007 inches (0.18 mm).

While the motor 10 is shown connected directly to the shaft and hub 12, a 32:1 gearbox is preferably included between the motor itself and the shaft.

The rivet 30 is also advantageously stainless steel, for example, 430 stainless steel.

While a specific embodiment of the invention has been shown and described in detail to illustrate the application of the principles of the invention, it will be understood that the invention may be embodied otherwise without departing from such principles.

## Claims

1. A pneumatic servo comprising:
a motor (10) having a shaft for rotation in response to an electrical signal;
a cam (14) connected to the shaft for rotation therewith, the cam (14) having an outer profiled periphery and opposite sides;
a pneumatic nozzle (16) having an opening for directing a flow of gas toward one side of the cam (14), near the periphery, the flow being obscured by different amounts as the cam (14) rotates to create a back pressure in the nozzle (16) comprising a pneumatic signal; and
a curved projection (30;32;34;36) engaged on an opposite side of the cam (14), the projection being aligned with the nozzle (16) opening and reducing oscillation excursions of the servo.

2. A servo according to claim 1, wherein the curved projection (30;32;34) is closed.

3. A servo according to claim 2, including a bracket (20) for holding the nozzle (16) and having a flange (24) spaced from the nozzle (16), the flange (24) having a bore (26) therethrough, the projection comprising a rivet (30) fixed in the bore (26) and having a curved closed head (31) engaged with the cam (14).

4. A servo according to claim 1 or claim 2, including a bracket (20) for supporting the nozzle (16), the bracket (20) having a flange (24) with a bore (26) therethrough, the projection (30;32;34;36) extending over the bore (26).

5. A servo according to claim 4, wherein the projection comprises a ball-bearing (32) over the bore (26).

6. A servo according to claim 4, wherein the projection comprises a curved projection (34) of slippery material over the bore (26).

7. A servo according to claim 4, wherein the projection is formed by an eyelet (36) fixed in the bore (26).

8. A servo according to claim 4, wherein the flange (24) has a surface facing the cam (14), the projection (34) being formed on the surface.
